# EUROPÄISCHE PATENTSCHRIFT

(11) **EP 2 483 130 B1**
(45) Veröffentlichungstag und Bekanntmachung des Hinweises auf die Patenterteilung: **13.11.2013**
(21) Anmeldenummer: 10760592.5
(22) Anmeldetag: 14.09.2010
(51) Int. Cl.: B62D 5/04

(54) **SICHERHEITSEINRICHTUNG FÜR ELEKTRISCHE SERVOLENKUNG**
SECURITY DEVICE FOR ELECTRIC POWER STEERING
DISPOSITIF DE SÉCUTRITÉ POUR DIRECTION ASSISTÉE

(30) Priorität: 02.10.2009 DE 102009048092
(43) Veröffentlichungstag der Anmeldung: 08.08.2012
(73) Patentinhaber: ThyssenKrupp Presta AG, 9492 Eschen (LI)
(72) Erfinder: BENYO, Imre, H-1077 Budapest (HU); SZEPESSY, Imre, H-1094 Budapest (HU); VARGA, Adam, H-1112 Budapest (HU)
(74) Vertreter: Lenzing Gerber Stute
(86) Internationale Anmeldenummer: PCT/EP2010/005615
(87) Internationale Veröffentlichungsnummer: WO 2011/038833

(56) Entgegenhaltungen:
- DE-A1- 10 035 356
- DE-A1- 10 110 741

## Beschreibung

Die vorliegende Erfindung betrifft ein Regelverfahren für ein Lenksystem mit elektrischer Hilfskraftunterstützung mit den Merkmalen des Oberbegriffs des Anspruchs 1.

Kraftfahrzeuglenkungen mit elektrischer Servounterstützung weisen im allgemeinen eine Lenksäule auf, die über ein Lenkgetriebe mit den gelenkten Rädern des Kraftfahrzeugs verbunden ist. Die Lenksäule enthält einen Drehmomentsensor für das Drehmoment, dass der Fahrer in die Lenkung einleitet. Weiter ist ein elektrischer Servomotor vorgesehen, der über ein Reduziergetriebe das Lenkgetriebe antreibt und den Fahrer bei dem Lenkvorgang unterstützt. Eine Regelung ist erforderlich, damit der Servomotor genau die Unterstützungskraft erzeugt, die zum Erreichen einer bestimmten Lenkcharakteristik erforderlich ist. Beispielsweise soll bei niedrigen Geschwindigkeiten und hohen Drehmomenten eine hohe Unterstützungskraft erzeugt werden, um den Fahrer beim Parken zu entlasten und bei höheren Geschwindigkeiten und geringen Drehmomenten soll eine geringe Unterstützungskraft erzeugt werden, damit der Fahrer ein direktes Lenkgefühl erhält: Ein sehr wichtiger Aspekt besteht darin, dass Fehlfunktionen des Sensors, der Steuerung oder des Elektromotors nicht dazu führen, dass der Elektromotor unerwünschte und unerwartete Lenkvorgänge durchführt.

Die allgemeine Aufgabe für Regelungen besteht deshalb darin, eine störsichere Funktion der elektrischen Servolenkung zu schaffen. Die deutsche Patentschrift DE 100 636 05 B4 sieht vor, dass ein Elektromotor über einen Treiber angesteuert wird. Zusätzlich ist eine Treiberbeschränkungsvorrichtung zur Beschränkung des Antriebs des Elektromotors vorgesehen. Die Treiberbeschränkungsvorrichtung schaltet bei einem erkannten Fehler den Motortreiber vollständig ab. Dies entspricht im Fahrbetrieb einem vollständigen und plötzlichen Wegfall der Servounterstützung. Dies kann für einen Fahrer irritierend wirken.

Die deutsche Offenlegungsschrift DE 198 21 220 A1 sieht vor, den Motorstrom mit einem oberen Grenzwert zu begrenzen. Auf diese Weise soll ein Überschwingen der Unterstützungskraft verhindert werden. Diese Grenze wird auf Basis der gegenelektromotorischen Kraft bestimmt. Damit ist es jedoch nicht möglich, Schwingungen im Regler selbst abzufangen. Schwingungen können auf verschiedene Ursachen zurückzuführen sein. Der Fahrer kann beispielsweise das Lenkrad unnötig hin und her bewegen. Die Straßenoberfläche kann Schwankungen aufweisen, die entsprechende Störgrößen in das Regelsystem einleiten. Die gelenkten Räder des Kraftfahrzeugs können eine Unwucht aufweisen, die ebenfalls periodische Störungen erzeugen. Solche Schwingungen sind durch eine Begrenzung des Motorstroms nicht aufzufangen. Die Druckschrift sieht auch keine untere Grenze für den Motorstrom vor, so dass das Unterstützungsmoment zu null werden kann. Dies entspricht dem oben beschriebenen Fall eines vollständigen und plötzlichen Ausfalls der Servounterstützung.

Eine ähnliche Lösung ist in dem US Patent US 6,404,156 B1 beschrieben. Hier wird die Beschränkung der Unterstützungskraft durch obere und untere Grenzwerte für den Motorstrom bewirkt. In der Kette der elektronischen Steuerung, die die verschiedenen Sensoren (Drehmomentsensoren, Geschwindigkeitssensor), einen Verstärker mit Phasenkompensationen, einen Motortreiber und den Servomotor selbst umfasst, werden in der Stufe des Verstärkers und der Phasenkompensation die Sensorwerte ohne vorgegebene Beschränkung verarbeitet und an den Treiber weitergeleitet. Der Treiber beschränkt den Wertebereich des Steuersignals zum Antrieb des elektrischen Motors, um zu hohe und zu niedrige Motorströme und damit zu hohe und zu niedrige Unterstützungsmomente zu vermeiden.

Die Lenkungen nach dem beschriebenen Stand der Technik weisen folgende Einschränkungen der Fahrdynamik auf:
Die Lenkungen nach der DE 100 636 05 B4 und der DE 198 21 220 A1 beschränken den Wertebereich für den möglichen Motorstrom in bestimmten Fahrsituationen. Dadurch wird auch die maximal mögliche Motorleistung und damit die maximale Servounterstützung begrenzt. In Extremsituationen wie z. B. Ausweichmanövern oder auch extremen unvorhergesehenen Einwirkungen auf die gelenkten Räder kann dies dazu führen, dass am Lenkrad ein höheres Handmoment auftritt als es eigentlich auf Grund der Fahrsituation und der technisch verfügbaren Leistung des Servomotors nötig wäre. Die Lenkungen nutzen deshalb in manchen Situationen nicht den vollen Dynamikbereich.des Servoaggregats aus.

Entsprechend einem weiteren Ausführungsbeispiel der Lenkung nach der US 6,404,156 B1 wird das Sensorsignal, das vom Drehmomentsensor der Lenkung an die Steuerung der Lenkung abgegeben wird in Abhängigkeit von bestimmten Parametern beschränkt. Hierdurch gehen Informationen über Extremwerte des Drehmomentsensors verloren, die beispielsweise auftreten können, wenn der Fahrer mit einem sehr hohen Handmoment das Lenkrad betätigt (Ausweichmanöver) oder wenn externe Einflüsse auf die Lenkung einwirken (Schlaglöcher, Bordsteinkontakt, plötzlicher Reifendefekt). Die Steuerung kann auf Grund des zuvor begrenzten Sensorsignals solche Situationen nicht erkennen und deshalb auf diese Situationen nicht angemessen reagieren. Eine angemessene Reaktion wäre in den genannten Fällen die Erhöhung des Unterstützungsmoments bis zum technisch möglichen Maximalwert, um das Handmoment an dem Lenkrad in vorgegebenen Grenzen zu halten. Dies ist bei einer Begrenzung des Sensorsignals vor der Steuerung nicht möglich. Auch diese Lenkung nutzt deshalb nicht den vollen technisch verfügbaren Dynamikbereich des Servoantriebs aus.

Die Offenlegungsschrift DE 100 35 356 A1 offenbart ähnlich ein Regelverfahren nach dem Oberbegriff des Anspruchs 1.

Es ist deshalb Aufgabe der vorliegenden Erfindung, ein Regelverfahren für eine elektrische Servolenkung bereitzustellen, das auch in kritischen Lenksituationen die Fahrstabilität erhält und die Fehlertoleranz erhöht. Insbesondere soll eine Regelung für eine elektrische Servolenkung geschaffen werden, die den zur Verfügung stehenden Dynamikbereich des Servoantriebs vollständig ausnutzen kann und die gegen Regelschwingungen unempfindlich ist.

Diese Aufgabe wird von einem Regelverfahren mit den Merkmalen des Anspruchs 1 gelöst. Die weiteren Ansprüche beschreiben vorteilhafte Weiterbildungen der Erfindung.

Bei einem Regelverfahren für ein Lenksystem mit elektrischer Hilfskraftunterstützung, umfassend:
- ein Steuermittel, beispielsweise ein Lenkrad, das von einem Fahrer ansteuerbar ist,
- einen elektrischen Hilfskraftmotor,
- eine elektrische Steuereinheit, die einen Speicher zum Speichern von digitalen Daten beinhaltet,
- eine Motortreibereinheit (Motorcontroller), die auf Basis eines Sollmotordrehmomentes, das an die Motortreibereinheit übermittelt wurde, elektrische Signale zur Ansteuerung des Hilfskraftmotors bestimmt und an diesen ausgibt,
- mindestens einer Sensoreinrichtung zur Bestimmung einer in das Steuermittel eingebrachten Steuergröße, beispielsweise eines Handdrehmomentes,
- wobei in der Steuereinheit unter Zuhilfenahme der Steuergröße ein Vorgabewert für ein Motordrehmoment des Hilfskraftmotors bestimmt wird,
ist zusätzlich vorgesehen, dass
- in einem Begrenzungsglied ein oberer Grenzwert für das Sollmotordrehmoment abgelegt ist, und
- für einen Fall A, in dem der Vorgabewert den oberen Grenzwert überschreitet, das Begrenzungsglied den oberen Grenzwert als Sollmotordrehmoment an die Motortreibereinheit ausgibt, und
- für einen Fall B, in dem der Vorgabewert den oberen Grenzwert nicht überschreitet, das Begrenzungsglied den Vorgabewert als Sollmotordrehmoment an die Motortreibereinheit ausgibt.

Auf diese Weise wird erreicht, dass sowohl das Sensorsignal in seinem vollen Wertebereich ausgewertet werden kann und dass die Motortreibereinheit den Motor mit ihrem vollen verfügbaren Ausgangsstrom beaufschlagen kann und so in Extremsituationen die maximal verfügbare Dynamik des Lenksystems ausgenutzt werden kann. Das Begrenzungsglied ist im Signalpfad zwischen der Steuerung, die den Vorgabewert für das Sollmotordrehmoment bestimmt, und dem Motorcontroller angeordnet. Das Begrenzungsglied kann aber physikalisch in einer Baueinheit mit der Steuerung zusammengefasst sein. Dabei ist es unerheblich, ob die Begrenzung rein softwaretechnisch oder rein hardwaretechnisch oder als Kombination aus softwaretechnischer und hardwaretechnischer Realisation dargestellt ist.

Wenn weiter vorgesehen ist, dass
- in dem Speicher ein unterer Grenzwert für das Sollmotordrehmoment abgelegt ist, dessen Wert kleiner als der obere Grenzwert ist und
- für einen Fall D, in dem der Vorgabewert dem unteren Grenzwert unterschreitet, das Begrenzungsglied den unteren Grenzwert als Sollmotordrehmoment an die Motortreibereinheit ausgibt, und
- für einen Fall E, in dem der Vorgabewert den unteren Grenzwert nicht unterschreitet und den oberen Grenzwert nicht überschreitet, das Begrenzungsglied den Vorgabewert als Sollmotordrehmoment an die Motortreibereinheit ausgibt,
kann auch verhindert werden, dass das Sollmotordrehmoment aufgrund einer Fehlinformation beispielsweise der Sensoren die Servounterstützung plötzlich und für den Fahrer überraschend wegfällt.

Wenn ein oberer Zwischenwert und ein unterer Zwischenwert definiert sind, wobei der obere Zwischenwert kleiner als der obere Grenzwert ist und der untere Zwischenwert größer als der untere Grenzwert ist, und in einem Bereich zwischen dem oberen Zwischenwert und dem oberen Grenzwert das Sollmotordrehmoment aus der Differenz des Vorgabewertes und des Grenzwertes bestimmt wird, kann eine gedämpfte Annäherung des Sollmotordrehmoments an den oberen Grenzwert erzielt werden. Einsprechendes gilt für die Annäherung an den unteren Grenzwert, wenn in einem Bereich zwischen dem unteren Zwischenwert und dem unteren Grenzwert das Sollmotordrehmoment aus der Differenz zwischen dem Vorgabewert und dem unteren Grenzwert bestimmt wird. Dies reduziert die Schwingungsneigung des Reglers. Dieser kontinuierliche Übergang (= gedämpfter Übergang) vom unbegrenzten in den auf den oberen und/oder unteren Grenzwert eingeschränkten Vorgabewert für das Motordrehmoment sorgt dafür, dass der Fahrer bei Erreichen von kritischen Zuständen eine langsamere Verschlechterung der Unterstützungsfunktion für die Lenkkraft erfährt und sich intuitiv darauf einstellt. Ein derartiger kontinuierlicher Übergang ist bei Fahrten auf schlechter Wegstrecke aber auch insbesondere bei Lenksystemen ohne Lenkrad, die beispielsweise mit Steuerknüppeln oder Joysticks arbeiten, vorteilhaft.

Entsprechend ist es für einen Fall C, in dem der Vorgabewert (T_{RM}) einen Wert annimmt, der zwischen dem oberen Zwischenwert (max1) und dem oberen Grenzwert (max) liegt, vorgesehen, dass als Sollmotordrehmoment ein Wert bestimmt wird, der dem Vorgabewert abzüglich eines Korrekturwertes, der sich aus dem Abstand des Vorgabewertes vom oberen Grenzwert berechnet, und diesen Wert direkt oder indirekt an den Motorcontroller (25) ausgibt.

Für einen weiteren Fall F, in dem der Vorgabewert (T_{RM}) einen Wert annimmt, der zwischen dem unteren Zwischenwert (min1) und dem unterem Grenzwert (min) liegt, ist es vorgesehen, dass als Sollmotordrehmoment ein Wert bestimmt wird, der dem Vorgabewert zuzüglich eines Korrekturwertes, der sich aus dem Abstand des Vorgabewertes vom unteren Grenzwert berechnet, und diesen Wert direkt oder indirekt an den Motorcontroller (25) ausgibt.

Die Annäherung an den Grenzwert kann proportional quadratisch oder logarithmisch erfolgen, um stetige und bevorzugt stetig differenzierbare Übergänge zu erzielen. Dabei kann die Annäherung an den Grenzwert auch über einen PD-Regler geregelt werden, der den Abstand des Vorgabewertes zu dem jeweiligen Grenzwert und die Änderung dieses Abstandes als Maß für die Regelung verwendet. Es kann weiter vorgesehen sein, dass der Abstand zwischen dem Vorgabewert und dem jeweils benachbarten Grenzwert mit einem Gewichtungsfaktor in eine Übergangsfunktion zur Bestimmung des Sollmotordrehmoments einfließt. Auch kann eine Lenkwinkelgeschwindigkeit ermittelt werden und mit einem Gewichtungsfaktor in die Übergangsfunktion einfließen. Beides ergibt eine Anpassung der Annäherung an die Grenzwerte mit einer fahrzustandsabhängigen Dämpfung.

Insbesondere gilt dies, wenn die Differenz zwischen dem oberen Zwischenwert und dem oberen Grenzwert und/oder zwischen dem unteren Zwischenwert und dem unteren Grenzwert abhängig von der Fahrzeuggeschwindigkeit und/oder weiteren Fahrzeugparametern ist.

Die Grenzwerte für das maximale und das minimale Sollmotordrehmoment können variabel gestaltet werden und somit den Parametern der Fahrsituation angepasst werden, wenn der obere und/oder der untere Grenzwert von der eingebrachten Steuergröße abhängig ist. Insbesondere können die Grenzwerte von der Fahrzeuggeschwindigkeit und/oder weiteren Fahrzeugparametern, wie beispielsweise nicht abschließend Lenkwinkelgeschwindigkeit, Lenkwinkel, zur Verfügung stehende Stromversorgung, Gierrate, abhängig sein.

Die Regelung kommt bei höheren Geschwindigkeiten einer Steuerung nahe, die keine oder nur geringe Regeleingriffe vornimmt, wenn bei hohen Fahrzeuggeschwindigkeiten der Abstand zwischen dem oberen Grenzwert und dem unteren Grenzwert kleiner ist als bei niedrigen Fahrzeuggeschwindigkeiten.

Der Fall, dass Grenzwerte häufig erreicht werden, kann ein Hinweis darauf sein, dass Fehlerzustände im Lenksystem vorliegen. Deshalb wird in einer vorteilhaften Weiterbildung die Häufigkeit des Erreichens der oberen und/oder unteren Grenzwerte für den Vorgabewert des Motordrehmoments ausgewertet. Mit Vorteil werden die Regelvorgänge vorbeugend begrenzt , wenn innerhalb einer vordefinierten Zeitspanne, die Häufigkeit des Erreichens des oberen und/oder unteren Grenzwertes eine vordefinierte Anzahl erreicht oder überschritten wird. In diesem Fall wird der obere oder der untere oder beide Grenzwerte derart verändert, dass der zulässige Bereich zwischen den Grenzwerten reduziert ist. Dies kann zum Beispiel erforderlich sein, wenn die Grenzwerte nicht wegen eines äußeren Einflusses oder eines Fahrereingriffs erreicht werden, sondern wenn falsche Sensorsignale dazu führen.

Weiter kann es bei temporären Störungen vorteilhaft sein, wenn der oder die Grenzwerte wieder auf den ursprünglichen Wert eingestellt wird bzw. werden, wenn während einer zweiten vordefinierten Zeitspanne der Grenzwert nicht mehr erreicht wird.

Nachfolgend wird ein Ausführungsbeispiel der vorliegenden Erfindung anhand der Zeichnung näher beschrieben. Es zeigen:
- Fig. 1:: ein elektrisch unterstütztes Lenksystem in einer perspektivischen Darstellung;
- Fig. 2:: einen Wertebereich für das Motordrehmoment in Abhängigkeit von dem Drehmomentsensorsignal für die erfindungsgemäße Lenkung;
- Fig. 3:: ein Blockschaltbild der elektrischen Servolenkung;
- Fig. 4:: eine schematische Darstellung des gesamten Lenksystems mit Lenkrad, Drehmomentsensor, Steuergerät, Motortreiber, Motor und Lenkgetriebe mit den gelenkten Rädern;
- Fig. 5:: den Programmablauf der Steuerung der elektrischen Servolenkung in einem Flussdiagramm;
- Fig. 6:: ein Beispiel für einen zulässigen Wertebereich des Drehmomentanforderungssignals T_{RA} in Abhängigkeit von dem Drehmomentsensorsignal T_{TS} mit einem beispielhaften Verlauf von einem oberen und unteren Zwischenwert, ab dem der Übergang in die Begrenzung eingeleitet wird;
- Fig. 7:: ein weiteres Beispiel für zulässigen Wertebereich des Drehmomentanforderungssignals T_{RA} in Abhängigkeit von dem Drehmomentsensorsignal T_{TS} mit einem gegenüber der Fig. 7 veränderten Verlauf von einem oberen und unteren Zwischenwert, ab dem der Übergang in die Begrenzung eingeleitet wird;
- Fig. 8:: eine Darstellung des Verlaufs von T"_{RM} innerhalb des zulässigen Wertebereichs mit gedämpften Übergang ; sowie
- Fig. 9:: eine Darstellung des Verlaufs von T"_{RM} innerhalb des zulässigen Wertebereichs ohne gedämpften Übergang;
- Fig. 10:: eine Darstellung des zulässigen Wertebereiches mit einer möglichen Einschränkung dieses Wertebereiches.

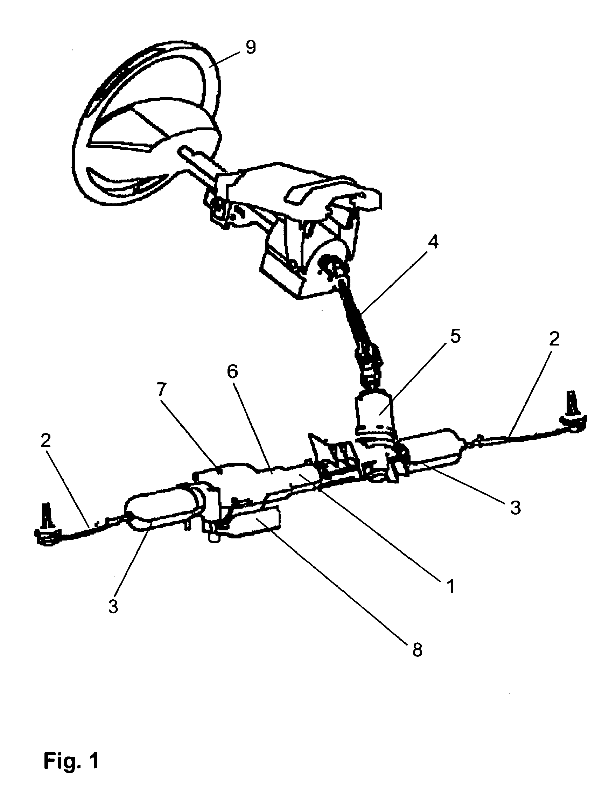

In der Fig. 1 ist eine Kraftfahrzeugservolenkung mit einem Lenkgetriebe 1 dargestellt, in dem eine Zahnstange in Längsrichtung des Lenkgetriebes 1 verschieblich angeordnet ist. Die Zahnstange trägt zwei Spurstangen 2, die über Kugelgelenke mit der Zahnstange verbunden sind. Die Kugelgelenke sind in Faltenbälgen 3 gegenüber Umwelteinflüssen gekapselt angeordnet. Die Spurstangen 2 sind ihrerseits mit Achsschenkeln der gelenkten Räder verbunden. Eine Verlagerung der Zahnstange in dem Lenkgetriebe 1 führt somit in bekannter Weise zu einer Verschwenkung der gelenkten Räder und damit zu einem Lenkvorgang des Kraftfahrzeugs.

Über eine Lenkwelle 4 wird ein Drehmoment in die Lenkung eingeleitet. Ein Drehmomentsensor 5 erfasst das in die Lenkwelle 4 eingeleitete Drehmoment. Zur Servounterstützung des Lenkvorgangs und somit zur Verringerung des vom Fahrer aufzuwendenden Handmomentes ist in dem Lenkgetriebe 1 ein Servoantrieb integriert. Der Servoantrieb umfasst ein Motorgehäuse 6, ein Getriebegehäuse 7 und eine Steuerung 8. Der Motor und das Getriebe sind in dieser Darstellung nicht erkennbar.

Im Betrieb wird in an sich bekannter Weise der Fahrer ein Lenkrad 9 betätigen, welches dann über die Lenkwelle 4 und ein Ritzel eine Verlagerung der Zahnstange in dem Lenkgetriebe 1 bewirkt. Das in dem Drehmomentsensor 5 erfasste Drehmoment wird überwacht und zur Vereinfachung des Lenkvorgangs wird der Servomotor durch die Steuerung 8 mit Strom beaufschlagt, um die Lenkbewegung des Fahrers zu unterstützen.

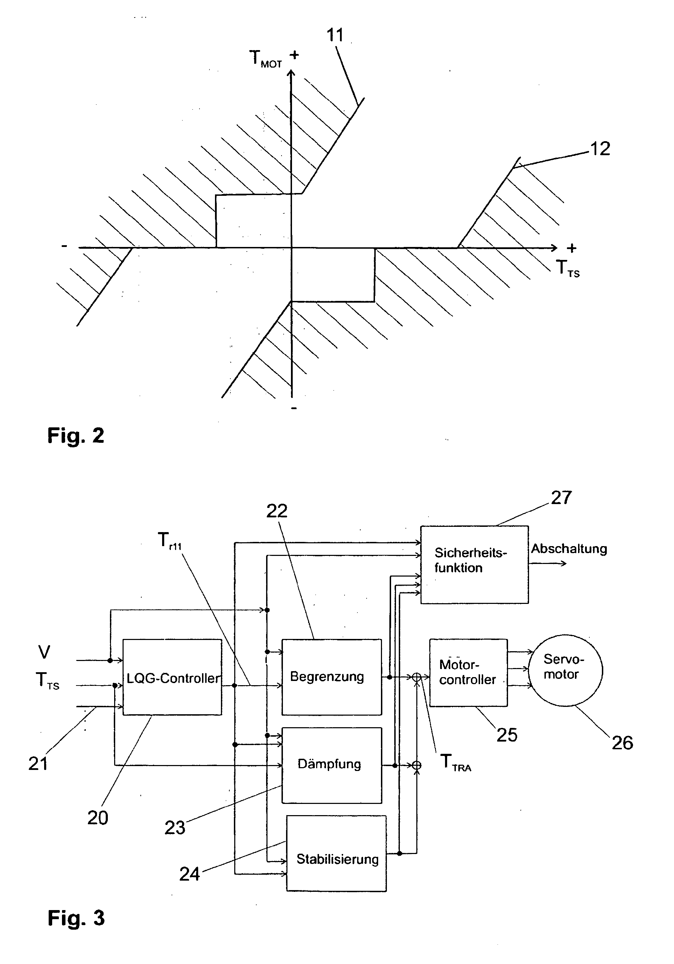

Die Möglichkeiten, die Servolenkung zu steuern und zu regeln, sind vielfältig. So kann die Steuerung 8 in einfachster Weise eine Servounterstützung durch den Servomotor bewirken, in dem das angeforderte Motorunterstützungsmoment einfach proportional zu dem ermittelten Sensormoment ist. In der Praxis werden Servolenkungen jedoch in vielen Fällen über Kennfelder gesteuert, die in Form einer Werttabelle oder durch Ablage analytischer Funktionen in einen Speicher gespeichert sind. Ein Wertebereich für das Ergebnis einer derartigen Regelung ist in der Fig. 2 dargestellt.

Die Fig. 2 zeigt in einem Koordinatensystem auf der Horizontalen mögliche Werte für ein Drehmomentsignal T_{TS}, welches der Drehmomentsensor 5 in Abhängigkeit von dem in das Lenkrad 9 eingeleiteten Drehmoment abgibt. In der vertikalen Achse ist ein mögliches Motordrehmoment T_{MOT} dargestellt, welches von dem Motortreiber auf Grund des Drehmomentsignals T_{TS} angefordert wird. Eine obere Kennlinie 11 und eine untere Kennlinie 12 begrenzen das Signal T_{MOT} nach oben und nach unten. Die schraffierten Bereiche oberhalb der Kennlinie 11 und unterhalb der Kennlinie 12 sind verbotene Bereiche, die das Motordrehmoment T_{MOT} nicht erreichen darf. Aus der Kennlinie 11 bestimmt sich entsprechend den jeweilige maximale Wert max, der für die an die Motorsteuerung übergebene Wert für das Drehmomentenanforderungssignal T_{RA} übergeben werden darf. Aus der Kennlinie 12 bestimmt sich entsprechend der jeweilige minimalen Wert min, der für die an die Motorsteuerung übergebene Wert für das Drehmomentenanforderungssignal T_{RA} übergeben werden darf. Der Bereich zwischen den Kennlinien 11 und 12 ist der erlaubte Wertebereich, in dem das Motorsignal T_{MOT} sich befinden darf. Bei einem gegebenen Drehmomentsignal T_{TS} kann das Motorsignal T_{MOT} verschiedene Werte annehmen. Diese Werte können z. B. abhängig von der Fahrzeuggeschwindigkeit V sein.

Die Fig. 3 zeigt ein Blockschaltbild einer erfindungsgemäßen Servolenkung. In dem Blockschaltbild sind als Eingangssignale die Fahrzeuggeschwindigkeit V und das Signal T_{TS} des Drehmomentsensors 5 vorgesehen, die einem Controller 20 zugeführt werden. Weitere Eingangssignale können bei 21 zugeführt werden, beispielsweise die Umgebungstemperatur, die Gierrate oder dergleichen. Der Controller 20 berechnet aus den Eingangswerten ein Signal für das angeforderte Motordrehmoment T_{RM} und das Drehmomentsignal T_{TS} steht dem Controller in vollem Umfang zur Verfügung und kann deshalb vollständig ausgewertet werden. Der Controller 20 erzeugt ebenso ein Signal T_{RM}, das den vollständigen möglichen Wertebereich umfasst, also einen maximal möglichen Dynamikumfang aufweist.

Ein Begrenzungsglied 22 erhält als Eingangssignal die Fahrzeuggeschwindigkeit V_{O} und das angeforderte Motordrehmoment T_{RM}. Das Begrenzungsglied 22 berechnet hieraus anhand einer Tabelle oder anhand von analytischen Funktionen einen Maximalwert und einen Minimalwert, den das Motordrehmoment bei den vorgegebenen Parameterwerten annehmen darf. Bezogen auf die Fig. 2 sorgt das Begrenzungsglied 22 dafür, dass der geforderte Drehmomentwert nicht in die schraffierten, verbotenen Bereiche des Diagramms aus Fig. 2 gelangt. Das von dem Begrenzungsglied 22 derart begrenzte Signal wird mit nicht näher beschriebenen Signalen eines Dämpfungsglieds 23 und eines Stabilisierungsgliedes 24 kombiniert, beispielsweise addiert. Die Kombination ergibt dann ein Vorgabesignal T_{RA} für das tatsächlich angeforderte Unterstützungsmoment. Das Signal T_{RA} wird an einen Motorcontroller 25 übergeben, der schließlich einen Servomotor 26 mit Strom beaufschlagt. Die erzeugten Signale werden auch an eine Sicherheitsfunktion 27 übergeben, die im Extremfall ein Abschalten der Servolenkung bewirken kann.

Zum Erreichen des angestrebten großen Dynamikumfangs der Servolenkung ist es hier wichtig, dass das Signal T_{TS} und das Ausgangssignal des Motorcontrollers 25 den vollen verfügbaren Dynamikbereich abdecken können, so dass die vollständige von dem Drehmomentsensor aufgenommene Bandbreite des Signals T_{TS} ausgewertet werden kann. Außerdem kann der Motorcontroller, dessen Ausgangswertebereich nicht limitiert ist, die maximal mögliche Unterstützungsleistung des Servomotors 26 abrufen. Die geschwindigkeitsabhängige oder von sonstigen Parametern abhängige Begrenzung des angeforderten Unterstützungsmoments T_{RA} findet in dem Begrenzungsglied 22 statt.

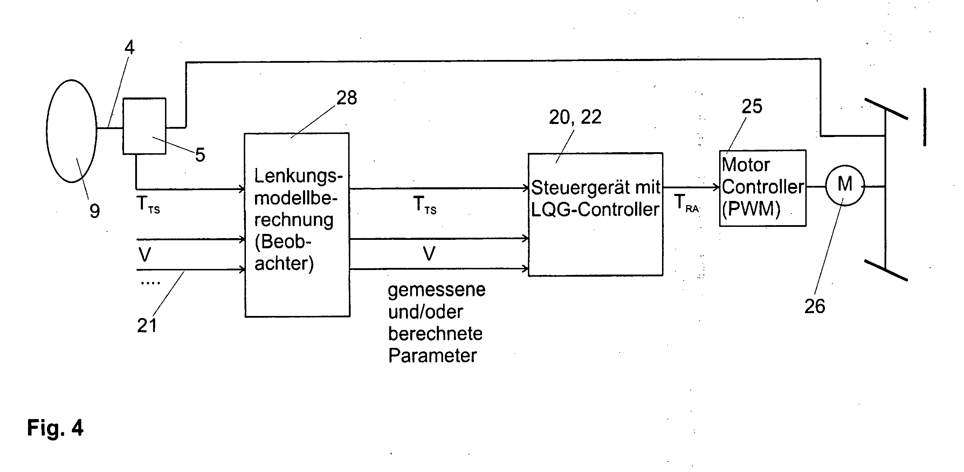

Die Fig. 4 zeigt die Regelstrecke der erfindungsgemäßen Servolenkung in einer schematischen Darstellung.

Das Handrad 9 ist über die Spindel 4 mit dem Drehmomentsensor 5 verbunden. Das Drehmomentsignal T_{TS} geht in die hier als integrierte Baugruppe dargestellte Einheit, die den Controller 20 und das Begrenzungsglied 22 umfasst. Weiter wird die Fahrzeuggeschwindigkeit V der Einheit 20, 22 zugeführt. Weitere Signale 21 werden, wie oben beschrieben, von der Steuerung berücksichtigt.

Die Einheit 20, 22 gibt in Abhängigkeit von den Eingangsgrößen das Drehmomentanforderungssignal T_{RA} an den Motorcontroller oder Motortreiber 25, der wiederum den Servomotor 26 mit Strom beaufschlagt. Der Servomotor 26 treibt über ein Getriebe die Zahnstange und damit die gelenkten Räder des Kraftfahrzeugs an. Die Fahrbahn wirkt über die gelenkten Räder zurück auf die Lenkspindel 4. In dem Drehmomentsensor 5 entstehen deshalb nicht nur Drehmomentsignale auf Grund einer Betätigung des Lenkrades 9, sondern auch auf Grund einer Rückwirkung von der Fahrbahn über die Räder zu der Lenkspindel 4. Insbesondere können Drehmomente an dem Drehmomentsensor 5 auch auftreten, wenn das Lenkrad 9 nicht betätigt oder gar vom Fahrer losgelassen wird. Die Erfindung ist jedoch nicht auf eine Regelstrecke, wie sie in Fig. 4 dargestellt ist, eingeschränkt. Die Erfindung ist auch anwendbar für den Fall eines steer-by-wires, bei dem kein mechanischer Durchgriff vom Lenkrad 9 auf die Räder des Kraftfahrzeugs vorhanden ist. In diesem Fall würde der Beobachter, das heißt die Lenkungsmodellberechnungseinheit (das unten erläuterte Berechnungsmodul 28) entsprechende Signale an einen hier nicht dargestellten Aktuator ausgeben, der der Lenkradbewegung ein entsprechendes Rückwirkungsmoment entgegensetzt.

In einer besonders vorteilhaften Weiterbildung erfolgt die Regelung mit einem LQG-Regelalgorithmus, wie er im Vortrag "Optimale Regelung einer elektromechanischen Servolenkung" auf der 5. VDI mechatronik Tagung 2003 in Fulda (7.-8. Mai 2003) von Herrmann Henrichfreise, Jürgen Jusseit und Harwin Niessen beschrieben wurde.

Bei dem bevorzugten Ausführungsbeispiel, wie es in der Fig. 4 dargestellt ist, ist zwischen der Übertragung der reinen Sensorsignale T_{TS} und V noch ein Berechnungsmodul 28 für das mathematische Modell der eingesetzten Lenkung geschaltet. Das Berechnungsmodul 28 enthält das mathematische Modell der verwendeten Lenkung und arbeitet nach Art eines Zustandsbeobachters. Das Berechnungsmodul 28 kann aus den am Eingang anliegenden Daten für das Drehmomentsensorsignal T_{TS'} der Fahrzeuggeschwindigkeit V und andere möglicherweise verfügbare Eingangsdaten 21 eine Vielzahl von Parametern und "Ersatz-Messwerte" berechnen, ohne dass diese mit separaten Sensoren gemessen werden müssten. Zu diesen Daten gehört beispielsweise die Reibung, die innerhalb des Lenksystem auftritt, und die nicht ohne Weiteres direkt messbar ist. Die Reibung kann aber durchaus bei einem erfindungsgemäßen Lenksystem berücksichtigt werden.

Auf diese Weise werden dem Contoller 20 sowohl gemessene Werte als auch berechneten "Ersatz-Messwerte" zur Berechnung des Vorgabewertes für das Motordrehmoment zugeführt.

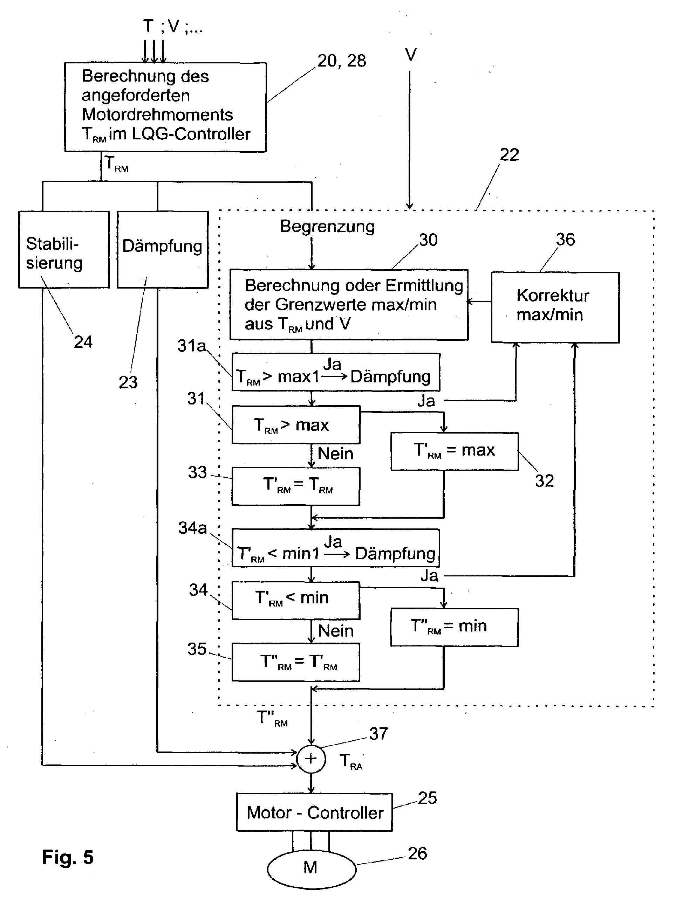

In der Fig. 5 ist der Verfahrensablauf in der erfindungsgemäßen Servolenkung veranschaulicht, der zur Berechnung der Handsteuerung des Servomotors 26 durchgeführt wird.

Die Eingangssignale T_{TS} und V werden in einem Controller ausgewertet und es wird in an sich bekannter Weise hieraus ein angefordertes Motordrehmoment berechnet, das als Signal T_{RM} ausgegeben wird. Das Steuergerät 20 ist aus dem Stand der Technik bekannt. Es kann beispielsweise nach dem Prinzip des Steuergeräts arbeiten, das in der Europäischen Patentschrift EP 1 373 051 B1 beschrieben wird. Dieses Steuergerät arbeitet wie oben beschrieben als Zustandsbeobachter, der aus Eingangsgrößen verschiedene Ausgangsgrößen und intern verwendete Daten berechnet. In dem bekannten Steuergerät, das dem Steuergerät 20 entsprechen kann, ist das mathematische Modell der Lenkung gespeichert, welches die verschiedenen Abhängigkeiten der Messwerte und der nicht gemessenen Zustandswerte voneinander enthält. Es kann aber auch vorgesehen sein, dass Steuergerät 20 als ein relativ einfaches Steuergerät in Form eines PID-Reglers oder ähnlich auszuführen.

Das Motordrehmomentsignal T_{RM} wird dann an die bereits benannten Komponenten nämlich den Dämpfungsteil 23 und den Stabilisierungsteil 24 übergeben. Parallel erhält auch das Begrenzungsglied 22 dieses Signal. Das weitere Eingangssignal, die Fahrzeuggeschwindigkeit V, geht ebenfalls an das Begrenzungsglied 22, das hier als gestrichelte Linie dargestellt ist.

In dem Begrenzungsglied 22 werden nun in einem Rechenschritt 30 aus einer Tabelle oder anhand von analytischen Funktionen die zulässigen Grenzen (Obergrenze max und Untergrenze min) des Motordrehmomentanforderungssignals T_{RM} berechnet. Das tatsächlich von dem Steuergerät 20 abgegebene Signal T_{RM} wird dann in einem ersten Schritt 31a mit dem oberen Zwischenwert max1 verglichen. Wenn dieser Wert max1 erreicht wird erfolgt eine Dämpfung des Wertes T_{RM} entsprechend, wie es nachfolgend beschrieben ist. Andernfalls bleibt der Wert T_{RM} unverändert. Das Ergebnis wird als T_{RM} an den nächsten Schritt weitergeleitet. Im zweiten Schritt 31 wird der Wert T_{RM} mit der Obergrenze max verglichen. Ist T_{RM} größer als max, so wird T'_{RM} = max gesetzt. Ist T_{RM} kleiner als der Grenzwert max, so bleibt T'_{RM} = T_{RM} unverändert. Dies ist in den Rechenschritten 32 und 33 veranschaulicht. Das so nach oben begrenzte Signal wird an den Schritt 34a weiter gegeben, in dem das Signal T_{RM} mit dem unteren Zwischenwert min1 verglichen wird. Ist T'_{RM} kleiner als der untere Zwischenwert min1, so erfolgt eine Dämpfung dieses Wertes T'_{RM} entsprechend, wie es nachfolgend beschrieben ist. Andernfalls bleibt der Wert T'_{RM} unverändert Das Ergebnis wird als T'_{RM} an den nächsten Schritt 34 weitergeleitet, in dem das Signal T_{RM} mit der Untergrenze verglichen wird. Ist T'_{RM} kleiner als die Untergrenze min, so wird T'_{RM} durch min ersetzt. Dies erfolgt im Schritt 35.

Wird im Schritt 34 festgestellt, dass T'_{RM} nicht kleiner als min ist, so wird T"_{RM} = T'_{RM} unverändert ausgegeben.

Wenn in den Rechenschritten 31 oder 34 festgestellt wird, dass einer der Grenzwerte max bzw. min erreicht wird, wird diese Information an ein Korrekturglied 36 übermittelt. Das Korrekturglied 36 überprüft, wie häufig die Grenzwerte max oder min erreicht oder überschritten werden. Je nach Programmierung für das jeweilige Lenksystem kann das Korrekturglied 36 dann neue Grenzwerte max und min und entsprechende neue untere und obere Zwischenwerte max1 und min1 berechnen, die von den ursprünglichen Grenzwerten bzw. Zwischenwerten abweichen. Diese neuen Grenz- und Zwischenwerte werden dann für zukünftige Berechnungen im Rechenschritt 30 verwendet. Beispielsweise kann bei häufigem Überschreiten eines Grenzwertes der Fall vorliegen, dass der Drehmomentsensor 5 defekt ist und zu hohe, zu niedrige oder oszillierende Drehmomentwerte T_{TS} ausgibt. In diesem Fall kann das Korrekturglied 36 vorsehen, dass die Grenzwerte max und min einander angenähert werden, sodass das Ausgangssignal T"_{RM} des Begrenzungsglieds 22 hinsichtlich des möglichen Wertebereichs weiter begrenzt wird. Oszillationen der Eingangssignale werden dann nur limitiert an den Motorcontroller 25 übergeben.

Das Korrekturglied 36 ist weiter so programmiert, dass bei Abwesenheit von Grenzwertüberschreitungen die Grenzwerte max und min wieder auf die ursprünglichen Werte zurückgesetzt werden. In der Praxis kann das Korrekturglied 36 so programmiert sein, dass eine Einengung der Grenzwerte erfolgt, wenn innerhalb von fünf Sekunden mehrere Grenzwertüberschreitungen festgestellt worden sind. Die Rücksetzung der Grenzwerte erfolgt dann, wenn die zuvor eingeengten Grenzwerte für ein vorzugsweise längeres Zeitintervall, beispielsweise 40 Sekunden, nicht mehr erreicht oder überschritten werden. Auf diese Weise bleibt die Reaktion des Korrekturglieds 36 auf eine temporäre Störung ohne permanenten Einfluss auf das Verhalten des Lenksystems.

Als Ausgabesignal des Begrenzungsglieds 22 wird also ein Signal erzeugt, das entweder das unveränderte Signal T"_{RM} = T_{RM} darstellt, wenn nämlich in den Schritten 31 und 34 festgestellt wird, dass T_{RM} kleiner als max und größer als min ist und in den Schritten 31a und 34a festgestellt wird, dass T_{RM} kleiner als max1 und größer als min1 ist. Werden in den Schritten 31 oder 34 die Grenzen nach oben oder nach unten überschritten, so wird der jeweilige aktuelle Grenzwert am Ausgang des Begrenzungsglieds 22 ausgegeben.

Dieses Ausgangssignal T"_{RM} wird auf einen Addierer 37 gegeben, der weiter die Ausgangswerte des Dämpfungsglieds 23 (das nicht mit der Dämpfung, die im Begrenzungsglied in den Schritten 31a und 34a selbst erfolgt, verwechselt werden darf) und des Stabilisierungsglieds 24 erhält. Letztere können positives oder negatives Vorzeichen aufweisen und werden in dem Addierer 37 zu einem Drehmomentanforderungs-Signal T_{RA} kombiniert. Das Signal T_{RA} wird dann an den Motorcontroller 25 abgegeben, der den Servomotor 26 entsprechend bestromt.

Es ist jedoch denkbar und möglich die Addition der Ausgangssignale von Dämpfung 23, Stabilisierung 24 und Begrenzung 22 durch eine andere Kombination zu ersetzen. Beispielsweise könnte eine Multiplikation oder komplexere Funktion zur Kombination verwendet werden.

Es ist weiterhin denkbar und möglich, das Ausgangssignal T"_{RM} von der Begrenzung 22 direkt an den Motor-Controller 25 als Drehmomentanforderungs-Signal T_{RA} auszugeben. In bestimmten Fällen kann durch den gedämpften Übergang vom rechnerischen Vorgabewert für das Motordrehmomentsignal T_{RM} zum begrenzten tatsächlichen Ausgangssignal T"_{RM} eine ausreichende Stabilität und Sicherheit für das Lenksystem bereit gestellt sein und auf die zusätzlichen Dämpfungs- und Stabilisierungsfunktionen verzichtet werden.

Es ist hervorzuheben, dass das Ausgangssignal T"_{RM} = T_{RM} des Steuergeräts 20 durch das Begrenzungsglied 22 unverändert bleibt, sofern die im Schritt 30 berechneten Grenz- und Zwischenwertewerte max, max1 und min, min1 nicht überschritten werden. Es steht damit für den Signalpfad T_{TS} bis T_{RA} die volle mögliche Dynamik zur Verfügung.

Die Begrenzung, die in den Schritten 33 und 35 erfolgt, wertet den vollen Informationsumfang des Drehmomentsensors T_{TS} und der anderen Eingangsdaten des Steuergeräts 20 aus. Auch im Falle der Begrenzung kann das an den Motorcontroller 25 abgegebene Drehmomentanforderungssignal T_{RA} durch die hinzugefügten Dämpfungs-Stabilisierungskomponenten größer oder kleiner als die Obergrenzen max und min aus dem Begrenzungsglied 22 werden, so dass der Motorcontroller 25 und folglich der Servomotor 26 eine höhere Dynamik entwickeln können, als das allein aus dem Begrenzungsglied 22 heraus vorgesehen wäre.

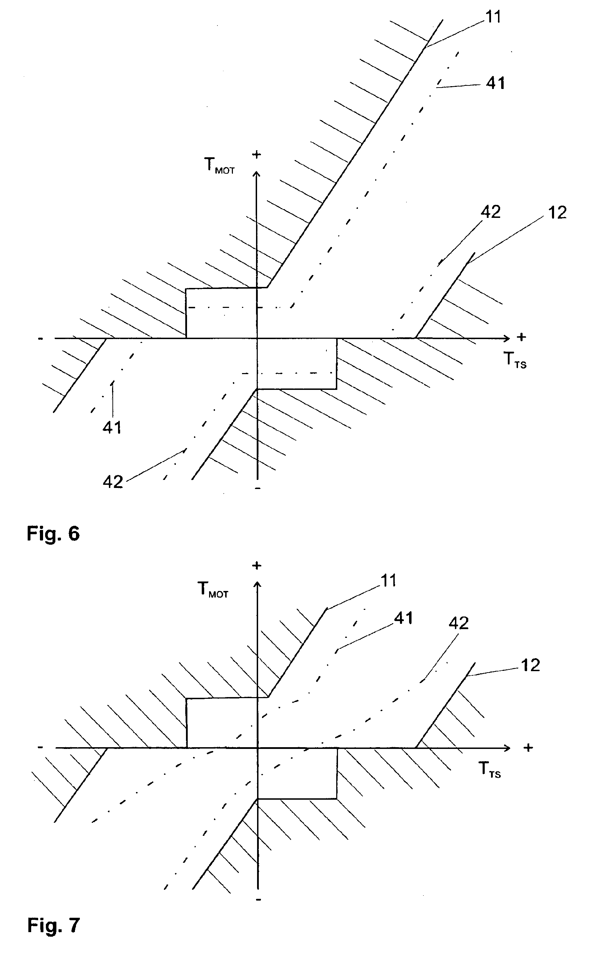

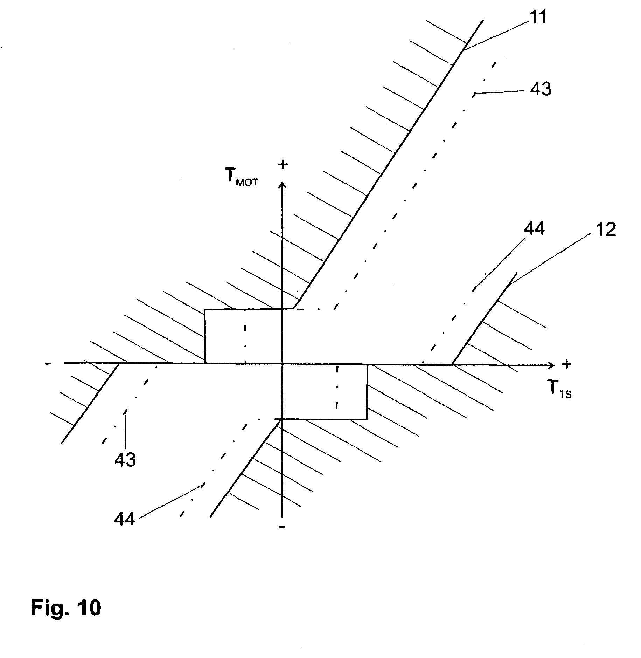

Die Fig. 6 und Fig. 7 zeigen eine Darstellung des zulässigen Wertebereichs wie in den Figuren 2 und 10. In der Fig. 7 ist mit einer Strichpunktlinie 41 ein oberer Zwischenwert gekennzeichnet, die Strichpunktlinie 42 kennzeichnet einen unteren Zwischenwert. Die Zwischenwerte 41 und 42 sind Übergangswerte, bei denen das Drehmomentanforderungssignal T_{RA} nicht direkt aus den Signal T_{RM} berechnet wird, und zwar auch dann nicht, wenn das Signal T_{RM} innerhalb der Grenzen max und min liegt.

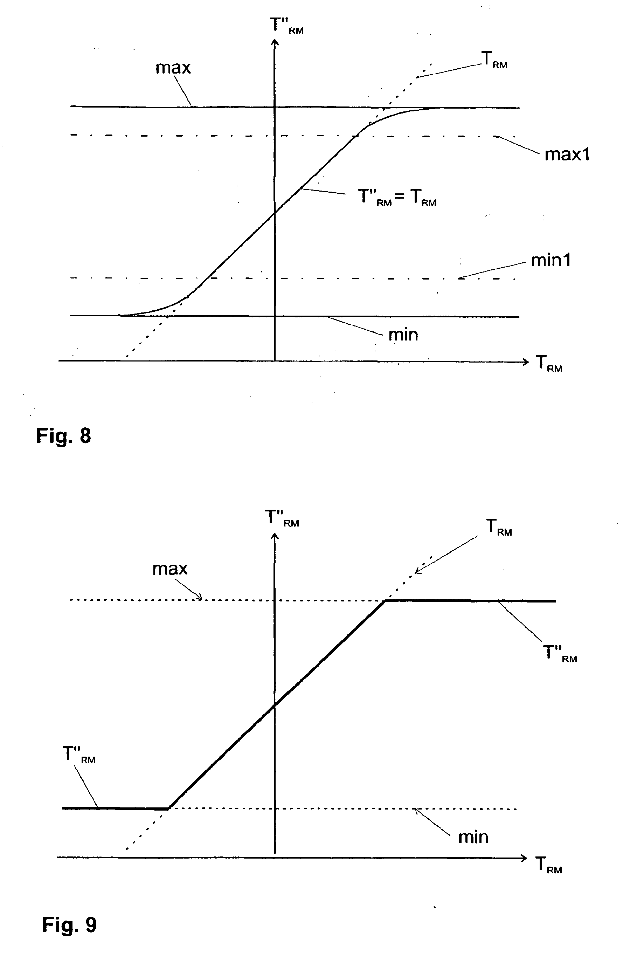

Bei dem hier beschriebenen Ausführungsbeispiel wird geprüft, ob das Eingangssignal des Begrenzungsgliedes 22 die Zwischenwerte 41 oder 42 erreicht. Wenn dies der Fall ist, wird das an den Motorcontroller 25 abgegebene Signal aus der Differenz zwischen dem Zwischenwert 41 und der Obergrenze 11 bzw. der Differenz aus dem Zwischenwert 42 und der Untergrenze 12 berechnet. Auf diese Weise wird bei Annäherung an die Grenzwerte 11 bzw. 12 das an den Addierer 37 abgegebene Signal kleiner. Es erfolgt im Idealfall eine asymptotische Annäherung an die Grenzwerte 11 und 12, sodass diese im Normalbetrieb nicht überschritten werden können. Genau genommen wären damit im besonders bevorzugten Fall die Schritte 31 und 32, bei denen der Vergleich mit der oberen Grenze max und unteren Grenze min erfolgt überflüssig, da in der Dämpfung im Schritt 31a bzw. 34a die Dämpfung im besonders bevorzugten Fall derart erfolgt, dass die Übergangskurve vom Vorgabewert T_{RM} auf den Ausgabewert T"_{RM} eine stetig differenzierbare Kurve, das heißt eine Kurve ohne Sprünge, oder noch besser eine Kurve deren Ableitung ebenfalls ohne Sprünge ist, ergeben. Im einfachsten Fall wird hierzu ein Korrekturwert, der sich aus der Differenz vom Vorgabewert T_{RM} zum Grenzwert bestimmt, im Fall des Erreichens des oberen Zwischenwertes max1 vom Vorgabewert T_{RM} subtrahiert und im Falle des Erreichens des unteren Zwischenwertes min1 auf den Vorgabewert T_{RM} addiert. Der Korrekturwert kann dabei durch lineare, Logarithmus- oder Exponentialfunktionen beschrieben werden. Der Korrekturwert besitzt dabei vorzugsweise den Wert Null für den Fall, dass der Vorgabewert T_{RM} genau gleich einem der beiden Zwischenwerte max1, max2 ist, und nimmt einem höheren Wert an, im Fall dass der Grenzwert erreicht wird. Es ist sogar denkbar und möglich, bei Überschreiten des Grenzwertes den Korrekturwert weiter zu erhöhen, so dass der geänderte Vorgabewert den Grenzwert niemals überschreitet. Diese Annäherung ist in der nachfolgenden Fig. 8 näher veranschaulicht.

Die Fig. 8 zeigt den Verlauf des Signals T"_{RM} am Ausgang des Begrenzungsmoduls 22 für das zu Fig. 7 beschriebene Ausführungsbeispiel, in dem Zwischenwerte 41 und 42 bei Annäherung an die Grenzwerte max bzw. min vorgesehen sind. Es ist dargestellt, dass der Wert T"_{RM} bei Annäherung an die Grenzwerte max und min nicht linear bis zu den Grenzwerten ansteigt, sondern ab den Zwischenwerten 41 und 42 asymptotisch angenähert wird. Derartige Übertragungsfunktionen, die zur Berechnung der Dämpfung herangezogen werden können, auf Basis der Exponential- oder Logarithmusfunktion sind bekannt und werden daher hier nicht weiter beschrieben.

Die Fig. 9 zeigt den anderen Fall, wie er in Zusammenhang mit Fig. 5 bereits beschrieben worden ist. Hier wird das Signal T"_{RM} bei Erreichen der Grenzwerte max oder min "hart" begrenzt. Es ergibt sich im Signalverlauf eine stetige, aber nicht stetig differenzierbare Komponente, die Anlass zu Regelschwingungen geben könnte. Dies wird bei den Ausführungsbeispielen der Figuren 7 und 8 vermieden.

Die Fig. 10 veranschaulicht den Wertebereich für das Motordrehmoment (T_{MOT}) in Abhängigkeit von dem Drehmomentsensorsignal T_{TS}. Die durchgezogenen Linien 11 und 12 sind bereits in der Fig. 2 beschrieben. Die Strichpunktlinien 43 und 44 kennzeichnen den oberen eingeschränkten Grenzwert und den unteren eingeschränkten Grenzwert nach der Bearbeitung durch das Korrekturglied 36 in Fig. 5. Der erlaubte Wertebereich für das Motordrehmoment, wie er zu Fig. 5 bei der Darstellung der Funktionsweise des Korrekturglieds 36 beschrieben wurde, liegt zwischen den Linien 43 und 44. Der Wertebereich ist folglich weiter beschränkt.

### Bezugszeichenliste

- 1.: Lenkgetriebe
- 2.: Spurstange
- 3.: Faltenbalg
- 4.: Lenkwelle
- 5.: Drehmomentsensor
- 6.: Motorgehäuse
- 7.: Getriebegehäuse
- 8.: Steuerung
- 9.: Lenkrad
- 11.: Obere Kennlinie
- 12.: Untere Kennlinie
- 20.: Controller
- 21.: Signal
- 22.: Begrenzungsglied
- 23.: Dämpfungsglied
- 24.: Stabilisierungsglied
- 25.: Motorcontroller
- 26.: Servomotor
- 27.: Sicherheitsfunktion
- 28.: Berechnungsmodul
- 30.: Rechenschritt
- 31.: Rechenschritt
- 32.: Rechenschritt
- 33.: Rechenschritt
- 34.: Rechenschritt
- 35.: Rechenschritt
- 36.: Korrekturglied
- 41.: oberer Zwischenwert
- 42.: unterer Zwischenwert
- 43.: beschränkter oberer Grenzwert
- 44.: beschränkter unterer Grenzwert

## Patentansprüche

1. Regelverfahren für ein Lenksystem mit elektrischer Hilfskraftunterstützung, umfassend:
- ein Steuermittel, beispielsweise ein Lenkrad (9), das von einem Fahrer ansteuerbar ist,
- einen elektrischen Hilfskraftmotor (26),
- eine elektrische Steuereinheit (20), die einen Speicher zum Speichern von digitalen Daten beinhaltet,
- einen Motorcontroller (25), die auf Basis eines Sollmotordrehmomentes (T_{RA}), das an den Motorcontroller (25) übermittelt wurde, elektrische Signale zur Ansteuerung des Hilfskraftmotors (26) bestimmt und an diesen ausgibt,
- mindestens einer Sensoreinrichtung (5) zur Bestimmung einer in das Steuermittel (9) eingebrachten Steuergröße (T_{TS}), beispielsweise eines Handdrehmomentes,
- wobei in der Steuereinheit (20) unter Zuhilfenahme der Steuergröße (T_{TS}) ein Vorgabewert (T_{RM}) für ein Motordrehmoment des Hilfskraftmotors (26) bestimmt wird,
- **dadurch gekennzeichnet, dass** ein Begrenzungsglied (22) vorgesehen ist, in dem ein oberer Grenzwert (max) und ein oberer Zwischenwert (max1) für das Sollmotordrehmoment (T_{RA}) abgelegt ist und
- für einen Fall A, in dem der Vorgabewert (T_{RM}) den oberen Grenzwert (max) überschreitet, das Begrenzungsglied (22) den oberen Grenzwert (max) als Sollmotordrehmoment an den Motorcontroller (25) direkt oder indirekt ausgibt und
- für einen Fall B, in dem der Vorgabewert (T_{RM}) den oberen Zwischenwert (max1) nicht überschreitet, das Begrenzungsglied (22) den Vorgabewert als Sollmotordrehmoment an den Motorcontroller (25) direkt oder indirekt ausgibt
- für einen Fall C, in dem der Vorgabewert (T_{RM}) einen Wert annimmt, der zwischen dem oberen Zwischenwert (max1) und dem oberen Grenzwert (max) liegt, als Sollmotordrehmoment ein Wert bestimmt, der dem Vorgabewert abzüglich eines Korrekturwertes, der sich aus dem Abstand des Vorgabewertes vom oberen Grenzwert berechnet, und diesen Wert direkt oder indirekt an den Motorcontroller (25) ausgibt.

2. Regelverfahren nach Anspruch 1, **dadurch gekennzeichnet, dass**
- in dem Begrenzungsglied (22) ein unterer Grenzwert (min) für das Sollmotordrehmoment (T_{RA}) abgelegt ist, dessen Wert kleiner als der obere Grenzwert (max) ist und
- für einen Fall D, in dem der Vorgabewert (T_{RM}) dem unteren Grenzwert unterschreitet (min), das Begrenzungsglied (22) den unteren Grenzwert (min) als Sollmotordrehmoment (T_{RA}) an den Motorcontroller (25) ausgibt, und
- für einen Fall E, in dem der Vorgabewert (T_{RM}) den unteren Grenzwert (min) nicht unterschreitet und den oberen Grenzwert (max) nicht überschreitet, das Begrenzungsglied (22) den Vorgabewert (T_{RM}) als Sollmotordrehmoment (T_{RA}) an den Motorcontroller (25) ausgibt, und
- für einen Fall F, in dem der Vorgabewert (T_{RM}) einen Wert annimmt, der zwischen dem unteren Zwischenwert (min1) und dem unterem Grenzwert (min) liegt, als Sollmotordrehmoment ein Wert bestimmt, der dem Vorgabewert zuzüglich eines Korrekturwertes, der sich aus dem Abstand des Vorgabewertes vom unteren Grenzwert berechnet, und diesen Wert direkt oder indirekt an den Motorcontroller (25) ausgibt.

3. Regelverfahren nach einem der vorhergehenden Ansprüche **dadurch gekennzeichnet, dass** der obere Grenzwert (max) und/oder der untere Grenzwert (min) von der eingebrachten Steuergröße (T_{TS}) abhängig ist.

4. Regelverfahren nach einem der vorhergehenden Ansprüche, **dadurch gekennzeichnet, dass** der obere Grenzwert (max) und/oder der untere Grenzwert (min) von der Fahrzeuggeschwindigkeit (v) und/oder weiteren Fahrzeugparametern, wie Lenkwinkelgeschwindigkeit, Lenkwinkel, zur Verfügung stehende Stromversorgung, Gierrate, abhängig ist.

5. Regelverfahren nach einem der vorhergehenden Ansprüche, **dadurch gekennzeichnet, dass** bei hohen Fahrzeuggeschwindigkeiten (v) der Abstand zwischen dem oberen Grenzwert (max) und dem unteren Grenzwert (min) kleiner ist als bei niedrigen Fahrzeuggeschwindigkeiten (v).

6. Regelverfahren nach einem der vorhergehenden Ansprüche, **dadurch gekennzeichnet, dass** eine vordefinierte Zeitspanne bestimmt ist, innerhalb derer die Häufigkeit des Erreichens der Grenzwerte (max, min) gemessen wird, wobei der obere Grenzwert (max) reduziert und/oder der untere Grenzwert (min) erhöht wird, wenn in dieser Zeitspanne mehr als eine vordefinierte Anzahl mal ein Grenzwert (max, min) erreicht wird.

7. Regelverfahren nach einem der vorhergehenden Ansprüche, **dadurch gekennzeichnet, dass** der obere Grenzwert (max) und/oder der untere Grenzwert (min) wieder auf den ursprünglichen Wert gesetzt wird, wenn für eine zweite vordefinierte Zeitspanne der obere und/oder der untere Grenzwert (max, min) nicht mehr erreicht wird.

8. Regelverfahren nach einem der vorhergehenden Ansprüche , **dadurch gekennzeichnet, dass** die Annäherung an den Grenzwert (min, max) proportional quadratisch oder logarithmisch erfolgt.

9. Regelverfahren nach einem der vorhergehenden Ansprüche, **dadurch gekennzeichnet, dass** die Annäherung an den Grenzwert über einen PD-Regler geregelt wird, der den Abstand des Vorgabewertes (T_{RM}) zu dem Grenzwert (min, max) und die Änderung dieses Abstandes als Maß für die Regelung verwendet.

10. Regelverfahren nach einem der vorhergehenden Ansprüche, **dadurch gekennzeichnet, dass** der Abstand zwischen dem Vorgabewert (T_{RM}) und dem Grenzwert (min, max) mit einem Gewichtungsfaktor in eine Übergangsfunktion zur Bestimmung des Sollmotordrehmoments (T_{RA}) einfließen.

11. Regelverfahren nach Anspruch 10, **dadurch gekennzeichnet, dass** eine Lenkwinkelgeschwindigkeit ermittelt wird, und das die Lenkwinkelgeschwindigkeit mit einem Gewichtungsfaktor in die Übergangsfunktion einfließt.

12. Regelverfahren nach einem der vorhergehenden Ansprüche, **dadurch gekennzeichnet, dass** die Differenz zwischen dem oberen Zwischenwert und dem oberen Grenzwert (max) und/oder zwischen dem unteren Zwischenwert und dem unteren Grenzwert (min) abhängig von der Fahrzeuggeschwindigkeit und/oder weiteren Fahrzeugparametern ist.

13. Regelverfahren nach einem der vorhergehenden Ansprüche, **dadurch gekennzeichnet, dass** der Ausgabewert für das Sollmotordrehmoment (T"_{RM}) mit einem Ausgabesignal einer Stabilisierung (24) und dem Ausgangssignal einer Dämpfung (23) kombiniert, beispielsweise additiv, wird und an den Motorcontroller (25) als Vorgabesignal (T_{RA}) weitergeleitet wird.

## Claims

1. Control method for a steering system having electric power assistance, comprising:
- a control means, for example a steering wheel (9), which can be actuated by a driver,
- an electric servomotor (26),
- an electric control unit (20) which contains a memory for storing digital data,
- a motor controller (25) which on the basis of a desired motor torque (T_{RA}), which was transmitted to the motor controller (25), determines electrical signals for actuating the servomotor (26) and outputs them to the latter,
- at least one sensor device (5) for determining a control variable (T_{TS}) introduced into the control means (9), for example a manual torque,
- wherein a set value (T_{RM}) for a motor torque of the servomotor (26) is determined in the control unit (20) with the aid of the control variable (T_{TS}),
- **characterised in that** a limiting element (22) is provided, in which an upper limit value (max) and an upper intermediate value (max1) are stored for the desired motor torque (T_{RA}), and
- for a case A, in which the set value (T_{RM}) exceeds the upper limit value (max), the limiting element (22) directly or indirectly outputs the upper limit value (max) as the desired motor torque to the motor controller (25) and
- for a case B, in which the set value (T_{RM}) does not exceed the upper intermediate value (max1), the limiting element (22) directly or indirectly outputs the set value as the desired motor torque to the motor controller (25) and
- for a case C, in which the set value (T_{RM}) assumes a value which is between the upper intermediate value (max1) and the upper limit value (max), the limiting element (22) determines a value as the desired motor torque which corresponds to the set value less a correction value, which is calculated from the difference between the set value and the upper limit value, and directly or indirectly outputs this value to the motor controller (25).

2. Control method according to Claim 1, **characterised in that**
- in the limiting element (22), a lower limit value (min) is stored for the desired motor torque (T_{RA}), which value is less than the upper limit value (max) and
- for a case D, in which the set value (T_{RM}) falls below the lower limit value (min), the limiting element (22) outputs the lower limit value (min) as the desired motor torque (T_{RA}) to the motor controller (25) and
- for a case E, in which the set value (T_{RM}) does not fall below the lower limit value (min) and does not exceed the upper limit value (max), the limiting element (22) outputs the set value (T_{RM}) as the desired motor torque (T_{RA}) to the motor controller (25) and
- for a case F, in which the set value (T_{RM}) assumes a value which is between the lower intermediate value (min1) and the lower limit value (min), the limiting element (22) determines a value as the desired motor torque which corresponds to the set value plus a correction value, which is calculated from the difference between the set value and the lower limit value, and directly or indirectly outputs this value to the motor controller (25).

3. Control method according to any one of the preceding claims, **characterised in that** the upper limit value (max) and/or the lower limit value (min) is/are dependent on the introduced control variable (T_{TS}).

4. Control method according to any one of the preceding claims, **characterised in that** the upper limit value (max) and/or the lower limit value (min) is/are dependent on the vehicle speed (v) and/or other vehicle parameters, such as steering angle speed, steering angle, power supply available, yaw rate.

5. Control method according to any one of the preceding claims, **characterised in that** at high vehicle speeds (v), the difference between the upper limit value (max) and the lower limit value (min) is less than at low vehicle speeds (v).

6. Control method according to any one of the preceding claims, **characterised in that** a predefined time period is determined, within which the frequency of obtaining the limit values (max, min) is measured, wherein the upper limit value (max) is reduced and/or the lower limit value (min) is increased if within this time period a limit value (max, min) is obtained more than a predefined number of times.

7. Control method according to any one of the preceding claims, **characterised in that** the upper limit value (max) and/or the lower limit value (min) is/are set to the original value again if the upper and/or the lower limit value(s) (max, min) is/are no longer obtained for a second predefined time period.

8. Control method according to any one of the preceding claims, **characterised in that** the approximation to the limit value (min, max) is carried out proportionally quadratically or logarithmically.

9. Control method according to any one of the preceding claims, **characterised in that** the approximation to the limit value is controlled via a PD controller which uses the difference between the set value (T_{RM}) and the limit value (min, max) and the change in this difference as the measure for the control.

10. Control method according to any one of the preceding claims, **characterised in that** the difference between the set value (T_{RM}) and the limit value (min, max) with a weighting factor is integrated into a transient function to determine the desired motor torque (T_{RA}).

11. Control method according to Claim 10, **characterised in that** a steering angle speed is determined, and **in that** the steering angle speed with a weighting factor is integrated into the transient function.

12. Control method according to any one of the preceding claims, **characterised in that** the difference between the upper intermediate value and the upper limit value (max) and/or between the lower intermediate value and the lower limit value (min) is dependent on the vehicle speed and/or other vehicle parameters.

13. Control method according to any one of the preceding claims, **characterised in that** the output value for the desired motor torque (T"_{RM}) is combined with an output signal of a stabilisation element (24) and the output signal of a damping element (23), for example by addition, and is transmitted to the motor controller (25) as a set signal (T_{RA}).

## Revendications

1. Procédé de régulation pour un système de direction avec une assistance électrique de force, comprenant :
- un moyen d'actionnement, par exemple un volant de direction (9), qui peut être actionné par un conducteur,
- un moteur électrique de force d'assistance (26),
- une unité de commande électrique (20), qui renferme une mémoire pour la mémorisation de données numériques,
- une commande-moteur (25), qui, sur la base d'un couple-moteur de consigne (T_{RA}), qui a été transmis à la commande-moteur (25), détermine des signaux électriques pour la commande du moteur de force d'assistance (26), et les délivre à celui-ci,
- au moins un système de détecteur (5) pour déterminer une grandeur d'actionnement (T_{TS}) ayant été appliquée au moyen d'actionnement (9), par exemple un couple manuel,
- procédé selon lequel dans l'unité de commande (20), on détermine, à l'aide de la grandeur d'actionnement (T_{TS}), une valeur prescrite (T_{RM}) pour un couple-moteur du moteur de force d'assistance (26),
- **caractérisé en ce qu'**il est prévu un organe de limitation (22) dans lequel sont stockées une valeur limite supérieure (max) et une valeur intermédiaire supérieure (max1) pour le couple-moteur de consigne (T_{RA}), et
- pour un cas A, dans lequel la valeur prescrite (T_{RM}) dépasse la valeur limite supérieure (max), l'organe de limitation (22) délivre directement ou indirectement la valeur limite supérieure (max) en tant que couple-moteur de consigne à la commande-moteur (25), et
- pour un cas B, dans lequel la valeur prescrite (T_{RM}) ne dépasse pas la valeur intermédiaire supérieure (max1), l'organe de limitation (22) délivre directement ou indirectement la valeur prescrite en tant que couple-moteur de consigne à la commande-moteur (25),
- pour un cas C, dans lequel la valeur prescrite (T_{RM}) prend une valeur, qui se situe entre la valeur intermédiaire supérieure (max1) et la valeur limite supérieure (max), on détermine en tant que couple-moteur de consigne, une valeur correspondant à la valeur prescrite à laquelle est soustraite une valeur de correction calculée à partir de l'écart de la valeur prescrite à la valeur limite supérieure, et on délivre cette valeur directement ou indirectement à la commande-moteur (25).

2. Procédé de régulation selon la revendication 1, **caractérisé en ce que**
- dans l'organe de limitation (22) est stockée une valeur limite inférieure (min) pour le couple-moteur de consigne (T_{RA}), dont la valeur est inférieure à la valeur limite supérieure (max), et
- pour un cas D, dans lequel la valeur prescrite (T_{RM}) est située en-dessous de la valeur limite inférieure (min), l'organe de limitation (22) délivre la valeur limite inférieure (min) en tant que couple-moteur de consigne (T_{RA}) à la commande-moteur (25), et
- pour un cas E, dans lequel la valeur prescrite (T_{RM}) ne se situe pas en-dessous de la valeur limite inférieure (min) et ne dépasse pas la valeur limite supérieure (max), l'organe de limitation (22) délivre la valeur prescrite (T_{RM}) en tant que couple-moteur de consigne (T_{RA}) à la commande-moteur (25), et
- dans un cas F, dans lequel la valeur prescrite (T_{RM}) prend une valeur qui se situe entre la valeur intermédiaire inférieure (min1) et la valeur limite inférieure (min), on détermine en tant que couple-moteur de consigne, une valeur correspondant à la valeur prescrite à laquelle est additionnée une valeur de correction calculée à partir de l'écart de la valeur prescrite à la valeur limite inférieure, et on délivre cette valeur directement ou indirectement à la commande-moteur (25).

3. Procédé de régulation selon l'une des revendications précédentes, **caractérisé en ce que** la valeur limite supérieure (max) et/ou la valeur limite inférieure (min) est fonction de la grandeur d'actionnement (T_{TS}) ayant été appliquée.

4. Procédé de régulation selon l'une des revendications précédentes, **caractérisé en ce que** la valeur limite supérieure (max) et/ou la valeur limite inférieure (min) est fonction de la vitesse (v) du véhicule et/ou d'autres paramètres du véhicule, comme la vitesse angulaire de braquage, l'angle de braquage, l'alimentation en courant disponible, le taux de lacet.

5. Procédé de régulation selon l'une des revendications précédentes, **caractérisé en ce que** dans le cas de vitesses (v) élevées du véhicule, l'écart entre la valeur limite supérieure (max) et la valeur limite inférieure (min) est plus faible que dans le cas de faibles vitesses (v) du véhicule.

6. Procédé de régulation selon l'une des revendications précédentes, **caractérisé en ce que** l'on détermine un intervalle de temps prédéfini, à l'intérieur duquel on mesure la fréquence à laquelle sont atteintes les valeurs limites (max, min), la valeur limite supérieure (max) étant réduite et/ou la valeur limite inférieure (min) étant augmentée lorsqu'au cours de cet intervalle de temps, une valeur limite (max, min) est atteinte plus qu'un nombre prédéfini de fois.

7. Procédé de régulation selon l'une des revendications précédentes, **caractérisé en ce que** la valeur limite supérieure (max) et/ou la valeur limite inférieure (min) est à nouveau remise à sa valeur initiale, lorsque pour un deuxième intervalle de temps prédéfini, la valeur limite (max, min) supérieure et/ou inférieure n'est plus atteinte.

8. Procédé de régulation selon l'une des revendications précédentes, **caractérisé en ce que** l'approche de la valeur limite (max, min) s'effectue de manière proportionnelle quadratique ou logarithmique.

9. Procédé de régulation selon l'une des revendications précédentes, **caractérisé en ce que** l'approche de la valeur limite est régulée par l'intermédiaire d'un régulateur PD (proportionnel-dérivée), qui utilise l'écart de la valeur prescrite (T_{RM}) à la valeur limite (min, max), et la variation de cet écart, en tant que mesure pour la régulation.

10. Procédé de régulation selon l'une des revendications précédentes, **caractérisé en ce que** l'écart entre la valeur prescrite (T_{RM}) et la valeur limite (min, max) entrent, avec un facteur de pondération, dans une fonction de transition pour la détermination de couple-moteur de consigne (T_{RA}).

11. Procédé de régulation selon la revendication 10, **caractérisé en ce que** l'on détermine une vitesse angulaire de braquage, et **en ce que** la vitesse angulaire de braquage entre, avec un facteur de pondération, dans la fonction de transition.

12. Procédé de régulation selon l'une des revendications précédentes, **caractérisé en ce que** la différence entre la valeur intermédiaire supérieure et la valeur limite supérieure (max) et/ou entre la valeur intermédiaire inférieure et la valeur limite inférieure (min) est fonction de la vitesse du véhicule et/ou d'autres paramètres du véhicule.

13. Procédé de régulation selon l'une des revendications précédentes, **caractérisé en ce que** la valeur délivrée pour le couple-moteur de consigne (T"_{RM}) est combinée, par exemple par addition, avec un signal délivré d'un système de stabilisation (24) et le signal de sortie d'un système d'amortissement (23), et est transmise à la commande-moteur (25) en tant que signal prescrit (T_{RA}).
